# EUROPÄISCHE PATENTSCHRIFT

(11) **EP 2 032 286 B1**
(45) Veröffentlichungstag und Bekanntmachung des Hinweises auf die Patenterteilung: **18.01.2012**
(21) Anmeldenummer: 07725478.7
(22) Anmeldetag: 23.05.2007
(51) Int. Cl.: B22D 11/12

(54) **VORRICHTUNG ZUM HERSTELLEN EINES METALBANDES DURCH STRANGGIESSEN**
DEVICE FOR PRODUCING A METAL STRIP BY CONTINUOUS CASTING
DISPOSITIF PERMETTANT DE PRODUIRE UNE BANDE MÉTALLIQUE PAR COULÉE CONTINUE

(30) Priorität: 26.05.2006 DE 102006024586; 14.05.2007 DE 102007022928
(43) Veröffentlichungstag der Anmeldung: 11.03.2009
(73) Patentinhaber: SMS Siemag AG, 40237 Düsseldorf (DE)
(72) Erfinder: SEIDEL, Jürgen, 57223 Kreuztal (DE); SUDAU, Peter, 57271 Hilchenbach (DE)
(74) Vertreter: Klüppel, Walter
(86) Internationale Anmeldenummer: PCT/EP2007/004578
(87) Internationale Veröffentlichungsnummer: WO 2007/137747

(56) Entgegenhaltungen:
- EP-A- 1 097 764
- EP-A2- 0 360 480
- WO-A-01/87509
- DE-A1- 4 118 960

## Beschreibung

Die Erfindung betrifft eine Vorrichtung zum Herstellen eines Metallbandes durch Stranggießen, mit einer Gießmaschine, in der eine Bramme, vorzugsweise eine Dünnbramme, gegossen wird, wobei in Förderrichtung der Bramme hinter der Gießmaschine mindestens eine Fräsmaschine angeordnet ist, in der zumindest eine Oberfläche der Bramme, vorzugsweise zwei sich gegenüberliegende Oberflächen, abgefräst werden kann, und wobei in Förderrichtung der Bramme hinter der Gießmaschine mindestens eine Entzunderungseinrichtung angeordnet ist.

Beim kontinuierlichen Gießen von Brammen in einer Stranggussanlage können Oberflächenfehler, wie beispielsweise Oszillationsmarkierungen, Gießpulverfehler oder längs und quer verlaufende Oberflächenrisse, entstehen. Diese treten bei konventionellen und Dünnbrammen-Gießmaschinen auf. Je nach Einsatzzweck des Fertigbandes werden deshalb die konventionellen Brammen zum Teil geflämmt. Manche Brammen werden auf Kundenwunsch generell geflämmt. Die Ansprüche an die Oberflächenqualität von Dünnbrammenanlagen nehmen dabei kontinuierlich zu.

Für die Oberflächenbearbeitung bieten sich das Flämmen, Schleifen oder das Fräsen an.

Das Flämmen hat den Nachteil, dass das abgeschmolzene Material infolge des hohen Sauerstoffgehaltes nicht wieder ohne Aufbereitung eingeschmolzen werden kann. Beim Schleifen mischen sich Metallsplitter mit dem Schleifscheibenstaub, so dass der Abrieb entsorgt werden muss. Beide Verfahren sind schwierig an die gegebene Transportgeschwindigkeit anpassbar.

Es bietet sich deshalb eine Oberflächenbearbeitung durch Fräsen an. Die heißen Frässpäne werden dabei gesammelt und lassen sich paketieren und ohne Aufbereitung wieder problemlos einschmelzen und so dem Produktionsprozess wieder hinzufügen. Weiterhin kann die Fräserdrehzahl leicht auf die Transportgeschwindigkeit (Gießgeschwindigkeit, Fertigstraßen-Einzugsgeschwindigkeit) eingesteilt werden. Die erfindungsgegenständliche Vorrichtung der eingangs genannten Art stellt daher auf das Fräsen ab.

Eine Vorrichtung zum Herstellen eines Metallbandes durch Stranggießen, bei der eine Fräsmaschine zum Abfräsen der Brammenoberfläche eingesetzt wird, ist beispielsweise aus der CH 584 085 und aus der DE 199 50 886 A1 bekannt.

Eine ähnliche Einrichtung ist auch in der DE 71 11 221 U1 offenbart. Dieses Dokument zeigt die Bearbeitung von aluminiumbändern unter Ausnutzung der Gießhitze, bei dem die Maschine mit der Gießanlage verbunden ist.

In der DE 41 18 960 wird zusätzlich zu der mechanischen Oberflächenbearbeitung (Warmfräsen, Bürsten und dergleichen) eine Druckwasserentzunderungsantage für die Erzeugung von hochwertigen Walzprodukten verwendet, die räumlich beabstandet zu der mechanischen Oberflächenbearbeitung in der Bearbeitungslinie angeordnet ist.

In der WO 01/87509 wird ein Verfahren zum Entfernen der Oxide von der Oberfläche warmgewalzter Kupferstäbe beschrieben. In der Anlage befinden sich ebenfalls eine Kantenfräsmaschine und eine Entzunderungsstrecke, die räumlich zueinander beabstandet sind.

Die EP 1 097 764 beschreibt ein Verfahren zur Oberflächenbearbeitung eines kontinuierlich gegossenen Stahlproduktes im warmen Zustand. Zur Beseitigung von Oberflächenfehlern, Oberflächenverunreinigung und dergleichen werden unter anderem auch eine Oberflächenbearbeitungsmaschine und eine räumlich davon getrennte Entzunderungseinrichtung eingesetzt.

Auch eine Inline-Abtragung von der Oberfläche einer Dünnbramme (Flämmen, Fräsen, etc.) kurz vor einer Walzstraße an Ober- und Unterseite oder nur einseitig wurde bereits vorgeschlagen, wozu auf die EP 1 093 866 A2 hingewiesen wird.

Eine weitere Ausgestaltung einer Oberflächenfräsmaschine zeigt die DE 197 17 200 A1. Hier wird u. a. die Veränderbarkeit der Fräskontur der Fräseinrichtung, die hinter der Stranggussanlage oder vor einer Walzstraße angeordnet ist, beschrieben,

Eine andere Anordnung einer Inline-Fräsmaschine in einer konventionellen Warmbandstraße zur Bearbeitung eines Vorbandes und deren Ausgestaltung schlagen die EP 0 790 093 B1, die EP 1 213 076 B1 und die EP 1 213 077 B1 vor. Bei der Oberflächenbearbeitung der Dünnbrammen in einer sog. CSP-Anlage sollen in der Bearbeitungslinie ("inline") abhängig von den detektierten Oberflächenfehlern ein- oder beidseitig ca. 0,1 - 2,5 mm von der warmen Brammenoberfläche entfernt werden. Um die Ausbringung nicht zu stark zu mindern, ist eine möglichst dicke Dünnbramme empfehlenswert (H = 60 - 120 mm).

Die Inline-Fräsmaschine wird in der Regel nicht für alle Produkte eines Walzprogramms eingesetzt, sondern nur für die, bei denen höhere Oberflächenanforderungen gefordert werden. Dies ist aus Ausbringungsgründen vorteilhaft und vermindert die Fräsmaschinenabnutzung und ist deshalb sinnvoll.

Die Inline-Fräsmaschine benötigt Bauraum. Störend ist der Brammen-Temperaturverlust im Bereich der Maschine. Dies gilt für den Einsatz nach der Gießmaschine, da die Gießgeschwindigkeit (Massenfluss) in der Regel niedrig ist. Aber auch vor der Fertigstraße ist der Temperaturverlust nachteilig, weil besonders bei dünnerem Band eine hohe Endwalztemperatur bei akzeptabler Bandauslaufgeschwindigkeit aus der Fertigstraße angestrebt wird.

Der vorliegenden Erfindung liegt daher die Aufgabe zugrunde, eine Vorrichtung zum Herstellen eines Metallbandes durch Stranggießen unter Einsatz einer Fräsmaschine so zu verbessern, dass eine optimale Brammenbearbeitung auch bei verschiedenen verfahrenstechnischen Anforderungen möglich wird. Insbesondere sollen Temperaturverluste bei der Brammenver- bzw. -bearbeitung gering gehalten werden.

Die Lösung dieser Aufgabe durch die Erfindung ist dadurch gekennzeichnet, dass die Fräsmaschine und die Entzunderungseinrichtung als integrale Einheit ausgebildet sind.

Dabei sind die Fräsmaschine und die Entzunderungseinrichtung bevorzugt in einem gemeinsamen Gehäuse untergebracht.

Die Fräsmaschine kann zwei Fräser umfassen. Die Entzunderungseinrichtung umfasst bevorzugt Hochdruckdüsen für Entzunderungsfluid. Allerdings sind auch andere Arten von Entzunderungselementen denkbar, die im Stand der Technik als solche bekannt sind (z. B. Ultraschall-Entzunderelemente).

Eine Fortbildung sieht vor, dass eine Anzahl Hochdruckdüsen entlang der Förderrichtung in der Fräs- und Entzunderungseinrichtung angeordnet sind.

Weiterhin kann vorgesehen werden, dass in Förderrichtung vor der Fräs- und Entzunderungseinrichtung ein Ofen angeordnet ist. Für die Bearbeitung der Oberseite und der Unterseite der Bramme kann jeweils ein Fräser angeordnet sein. Die beiden Fräser können in Förderrichtung voneinander beabstandet angeordnet sein. Weiterhin kann vorgesehen sein, dass jeder Fräser mit einer auf der anderen Seite der Bramme angeordneten Stützrolle zusammenwirkt.

In Förderrichtung hinter der Fräs- und Entzunderungseinrichtung ist zumeist ein Walzgerüst oder eine Walzstraße angeordnet.

Die Vorrichtung ist bevorzugt so ausgebildet, dass zwei unterschiedliche Arbeitsmodi betrieben werden können. Nach einer ersten Möglichkeit ist vorgesehen, dass die Vorrichtung so ausgebildet ist, dass die Entzunderungseinrichtung und die Fräsmaschine wahlweise alternativ benutzt werden können. Eine Alternative sieht vor, dass die Vorrichtung so ausgebildet ist, dass die Entzunderungseinrichtung und die Fräsmaschine gleichzeitig betrieben werden können.

Es können also die Entzunderungsanlage und die Fräsmaschine gleichzeitig aktiviert werden. Um jedoch eine hohe Einlauftemperatur in die Walzstraße zu erzeugen, wird in vorteilhafter Weise in der Regel bei guter Oberflächenqualität entweder die Fräsmaschine oder die Entzunderungsanlage eingesetzt.

Mit der vorgeschlagenen Lösung wird es möglich, dass Temperaturverluste bei der Brammenver- bzw. -bearbeitung gering gehalten werden können. Dies führt zu einer qualitativ verbesserten Herstellung von Brammen, insbesondere von Dünnbrammen.

Ferner ist es von erheblichem Vorteil, dass die Brammenherstellung wesentlich ökonomischer und ökologischer durchgeführt werden kann, was das Fräsen der Brammenoberfläche und das Entzundern anbelangt. Es wird nämlich in sehr günstiger Weise möglich, das für die Entzunderung benötigte Fluid (Wasser) auch für die Unterstützung des Fräsprozesses zu verwenden, so dass der diesbezügliche Fluidbedarf wesentlich geringer wird.

In der Zeichnung ist ein Ausführungsbeispiel der Erfindung dargestellt. Es zeigen:
- Fig. 1: schematisch die Seitenansicht einer Vorrichtung zum Herstellen eines Metallbandes durch Stranggießen, bei der eine Fräsmaschine und eine Entzunderungseinrichtung zum Einsatz kommt, und
- Fig. 2: einen vergrößerten Ausschnitt aus Fig. 1 mit Darstellung der Fräsund Entzunderungseinrichtung.

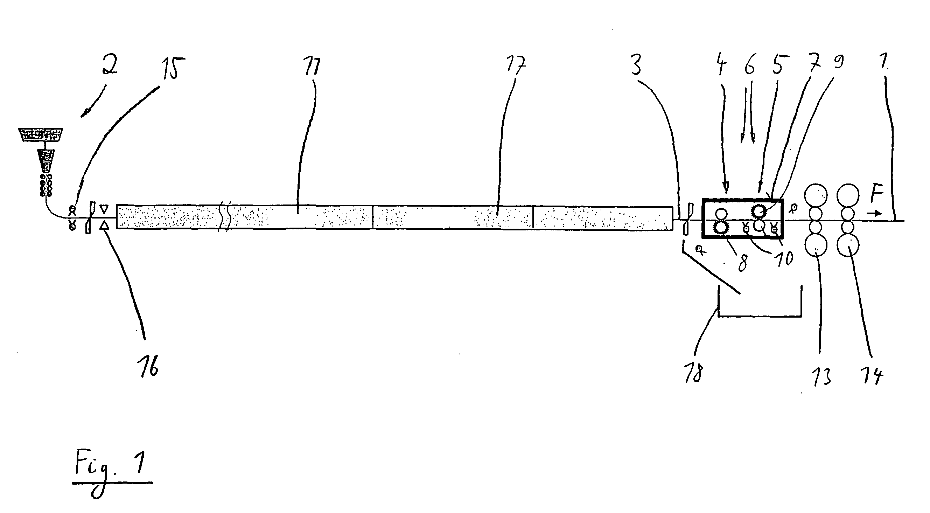

In Fig. 1 ist eine Vorrichtung zum Herstellen eines Metallbandes 1 durch Stranggießen dargestellt. Das Metallband 1 bzw. die entsprechende Bramme 3 wird in einer Gießmaschine 2 in bekannter Weise stranggegossen. Bei der Bramme 3 handelt es sich bevorzugt um eine Dünnbramme. Unmittelbar hinter der Gießmaschine 2 wird die Bramme 3 einer Brammenreinigung in einer Reinigungsanlage 15 unterzogen. Im Anschluss daran erfolgt eine Oberflächeninspektion mittels eines Oberflächenmessgeräts 16. Anschließend gelangt die Bramme 3 in einen Ofen 11, so dass sie auf einer gewünschten Prozesstemperatur gehalten werden kann. An den Ofen schließt sich eine Fähre 17 an.

Hinter dem Ofen 11 bzw. der Fähre 17 gelangt die Bramme 3 in eine integrale Einheit 6 bestehend aus einer kombinierten Fräsmaschine 4 und Entzunderungseinrichtung 5. Die Fräsmaschine 4 und die Entzunderungseinrichtung 5 weisen ein gemeinsames Gehäuse 7 auf oder sind zumindest dicht nebeneinander angeordnet. In der integralen Einheit 8 wird die Bramme 3 einem kombinierten Fräs- und/oder Entzunderungsprozess unterzogen. Im Anschluss daran - in Förderrichtung F des Bandes 1 bzw. der Bramme 3 betrachtet - gelangt das Metallband 1 in eine ein- oder mehrgerüstige Walzstraße. In Fig. 1 ist ein Walzgerüst 13 und ein Walzgerüst 14 angedeutet.

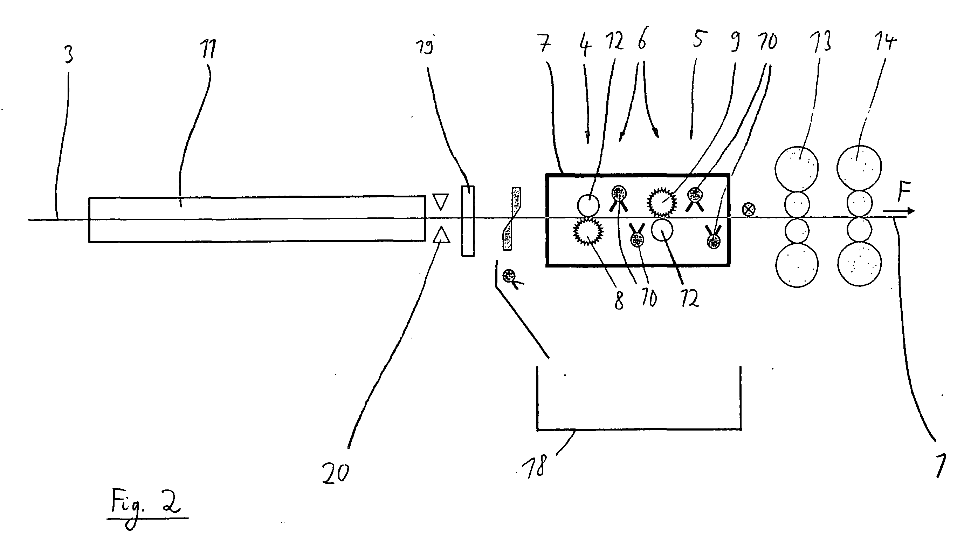

Einzelheiten der integralen Einheit 6, bestehend aus kombinierter Fräs- und Entzunderungsanlage, gehen aus Fig. 2 hervor.

In dem Gehäuse 7 befinden sich - in Förderrichtung F beabstandet - zwei Fräser 8 und 9. Der in Förderrichtung F vordere Fräser 8 fräst die Unterseite der Bramme 3 in an sich bekannter Weise. Der in Förderichtung F nachfolgende Fräser 9 ist zum Fräsen der Brammen-Oberseite vorgesehen. Beide Fräser 8, 9 arbeiten mit Stützrollen 12 zusammen, die auf der jeweils gegenüber liegenden Seite der Bramme 3 positioniert sind.

Wie weiter zu sehen ist, sind in dem Gehäuse 7 Hochdruckdüsen 10 in Form von Düsenbalken angeordnet, die sich über die gesamte Breite der Bramme 3 erstrecken (also in Richtung normal zur Zeichenebene in Fig. 2). Mit den Hochdruckdüsen 10 kann in bekannter Weise Wasser auf die Bandoberfläche ausgebracht werden, um von der Oberfläche Zunder zu entfernen. Grundsätzlich möglich ist es freilich auch, dass anders geartete Entzunderungselemente zum Einsatz kommen.

Von Vorteil ist es, dass das über die Düsen 10 ausgebrachte Wasser auch gleichzeitig zum Kühlen der Fräser 8, 9 genutzt werden kann, so dass diese eine hinreichende Standzeit aufweisen.

Unter der integralen Einheit 6 ist ein Auffangbehälter 18 für abgefrästes Material bzw. für Zunder angeordnet. Vorgesehen werden können dort auch Vorrichtungen sein für den Abtransport von Spänen bzw. Zunder.

Vor der integralen Einheit 6 kann eine Oberflächeninspektion erfolgen, was durch die Bezugsziffer 20 angedeutet ist. Ferner ist dort im Ausführungsbeispiel eine Profilmessung 19 vorgesehen.

Die vorgeschlagene integrale Einheit 6 mit Fräseinrichtung 4 und Entzunderungseinrichtung 5 kann sich also auf den Anwendungsfall optimal einstellen und hat die Aufgabe, die Temperaturführung möglichst optimal bei hoher Temperatur oder mit geringem Temperaturverlust zu gestalten.

Das vorgeschlagene Konzept stellt also darauf ab, dass die Fräsmaschine komplett im Bereich des Zunderwäschers integriert ist. Die beiden oberflächenbeeinflussende Einrichtungen (Zunderwäscher, Fräsmaschine) können so flexibel wahlweise benutzt werden. Das Wasser des Zunderwäschers kann gleichzeitig zum Wegspülen der Frässpäne verwendet werden.

### Bezugszeichenliste:

- 1: Metallband
- 2: Gießmaschine
- 3: Bramme
- 4: Fräsmaschine
- 5: Entzunderungseinrichtung
- 6: integrale Einheit
- 7: Gehäuse
- 8: Fräser
- 9: Fräser
- 10: Hochdruckdüse
- 11: Ofen
- 12: Stützrolle
- 13: Walzgerüst
- 14: Walzgerüst
- 15: Reinigungsanlage
- 16: Oberflächenmessgerät
- 17: Fähre
- 18: Auffangbehälter
- 19: Profilmessung
- 20: Oberflächeninspektion

- F: Förderrichtung

## Patentansprüche

1. Vorrichtung zum Herstellen eines Metallbandes (1) durch Stranggießen, mit einer Gießmaschine (2), in der eine Bramme (3) gegossen wird, wobei in Förderrichtung (F) der Bramme (3) hinter der Gießmaschine (2) mindestens eine Fräsmaschine (4) angeordnet ist, in der zumindest eine Oberfläche der Bramme (3) abgefräst werden kann, und wobei in Förderrichtung (F) der Bramme (3) hinter der Gießmaschine (2) mindestens eine Entzunderungseinrichtung (5) angeordnet ist,
**dadurch gekennzeichnet,**
**dass** die Fräsmaschine (4) und die Entzunderungseinrichtung (5) dadurch als integrale Einheit (6) ausgebildet sind, dass die Frasmaschine (4) und
die Entzunderungseinrichtung (5) direkt hintereinander in einem gemeinsamen Gehäuse (7) angeordnet sind.

2. Vorrichtung nach Anspruch 1,
**dadurch gekennzeichnet,**
**dass** die Fräsmaschine (4) zwei Fräser (8, 9) umfasst.

3. Vorrichtung nach Anspruch 1 oder 2,
**dadurch gekennzeichnet**,
das die Entzunderungseinrichtung (5) Hochdruckdüse (10) für Entzunderungsfluid umfasst.

4. Vorrichtung nach Anspruch 3,
**dadurch gekennzeichnet,**
**dass** eine Anzahl Hochdruckdüsen (10) entlang der Förderrichtung (F) in der Fräs- und Entzunderungseinrichtung (6) angeordnet sind.

5. Vorrichtung nach einem der Ansprüchen 1 bis 4,
**dadurch gekennzeichnet,**
**dass** in Förderrichtung (F) vor der Fräs- und Entzunderungseinrichtung (6) ein Ofen (11) angeordnet ist.

6. Vorrichtung nach einem der Ansprüchen 1 bis 5,
**dadurch gekennzeichnet,**
**dass** für die Bearbeitung der Oberseite und der Unterseite der Bramme (3) jeweils ein Fräser (8, 9) angeordnet ist.

7. Vorrichtung nach Anspruch 6,
**dadurch gekennzeichnet,**
**dass** die beiden Fräser (8, 9) in Förderrichtung (F) voneinander beabstandet angeordnet sind.

8. Vorrichtung nach Anspruch 7,
**dadurch gekennzeichnet,**
**dass** jeder Fräser (8, 9) mit einer auf der anderen Seite der Bramme (3) angeordneten Stützrolle (12) zusammenwirkt.

9. Vorrichtung nach einem der Ansprüche 1 bis 8,
dadurch gekenrizeichnet,
dass in Förderrichtung (F) hinter der Fräs- und Entzunderungseinrichtung (6) ein Walzgerüst oder eine Walzstraße (13, 14) angeordnet ist.

10. Vorrichtung nach einem der Ansprüche 1 bis 9,
**dadurch gekennzeichnet,**
**dass** sie so ausgebildet ist, dass die Entzunderungseinrichtung (6) und die Fräsmaschine (4) wahlweise alternativ betreibbar sind.

11. Vorrichtung nach einem der Ansprüche 1 bis 9,
**dadurch gekennzeichnet,**
**dass** sie so ausgebildet ist, dass die Entzunderungseinrichtung (6) und die Fräsmaschine (4) gleichzeitig betreibbar sind.

## Claims

1. Device for producing a metal strip (1) by continuous casting, comprising a casting machine (2) in which a slab (3) is cast, wherein arranged downstream of the casting machine (2) in the conveying direction (F) of the slab (3) is at least one milling machine (4) in which at least one surface of the slab (3) can be milled down and wherein at least one descaling system (5) is arranged downstream of the casting machine (2) in the conveying direction (F), **characterised in that** the milling machine (4) and the descaling device (5) are so constructed as an integral unit (6) that the milling machine (4) and the descaling device (5) are arranged directly one after the other in a common housing (7).

2. Device according to claim 1, **characterised in that** the milling machine (4) comprises two millers (8, 9).

3. Device according to claim 1 or 2, **characterised in that** the descaling device (5) comprises high-pressure nozzles (10) for descaling fluid.

4. Device according to claim 3, **characterised in that** a number of high-pressure nozzles (10) is arranged in the milling and descaling device (6) along the conveying direction (F).

5. Device according to any one of claims 1 to 4, **characterised in that** a furnace (11) is arranged upstream of the milling and descaling device (6) in the conveying direction (F).

6. Device according to any one of claims 1 to 5, **characterised in that** a respective miller (8, 9) is arranged for machining each of the upper side and the underside of the slab (3).

7. Device according to claim 6, **characterised in that** the two millers (8, 9) are arranged at a mutual spacing in the conveying direction (F).

8. Device according to claim 7, **characterised in that** each miller (8, 9) co-operates with a support roll (12) arranged on the other side of the slab (3).

9. Device according to any one of claims 1 to 8, **characterised in that** a rolling stand or a rolling train (13, 14) is arranged downstream of the milling and descaling device (6) in the conveying direction (F).

10. Device according to any one of claims 1 to 9, **characterised in that** it is so constructed that the descaling device (6) and the milling machine (4) can be selectably alternatively operated.

11. Device according to any one of claims 1 to 9, **characterised in that** it is so constructed that the descaling device (6) and the milling machine (4) can be operated at the same time.

## Revendications

1. Dispositif de production d'une bande métallique (1) par coulée continue, comprenant une machine de coulée (2), dans laquelle une brame (3) est coulée, au moins une machine de fraisage (4) étant disposée en aval de la machine de coulée (2) dans le sens de transport (F) de la brame (3), dans laquelle au moins une surface de la brame (3) peut être fraisée et au moins un dispositif de décalaminage (5) étant disposé en aval de la machine de coulée (2) dans le sens de transport (F) de la brame (3), **caractérisé en ce que** la machine de fraisage (4) et le dispositif de décalaminage (5) sont réalisés en tant qu'unité intégrale (6) **en ce que** la machine de fraisage (4) et le dispositif de décalaminage (5) sont disposés directement l'un derrière l'autre dans un boîtier (7) commun.

2. Dispositif selon la revendication 1, **caractérisé en ce que** la machine de fraisage (4) comprend deux fraises (8, 9).

3. Dispositif selon la revendication 1 ou 2, **caractérisé en ce que** le dispositif de décalaminage (5) comprend des pulvérisateurs haute pression (10) pour le fluide de décalaminage.

4. Dispositif selon la revendication 3, **caractérisé en ce qu'**un certain nombre de pulvérisateurs haute pression (10) sont disposés dans le dispositif de fraisage et de décalaminage (6) le long du sens de transport (F).

5. Dispositif selon l'une quelconque des revendications 1 à 4, **caractérisé en ce qu'**un four (11) est disposé en amont du dispositif de fraisage et de décalaminage (6) dans le sens du transport (F).

6. Dispositif selon l'une quelconque des revendications 1 à 5, **caractérisé en ce qu'**à chaque fois une fraise (8, 9) est agencée pour l'usinage de la face supérieure et de la face inférieure de la brame (3).

7. Dispositif selon la revendication 6, **caractérisé en ce que** les deux fraises (8, 9) sont disposées à une certaine distance l'une de l'autre dans le sens du transport (F).

8. Dispositif selon la revendication 7, **caractérisé en ce que** chaque fraise (8, 9) interagit avec un rouleau d'appui (12) disposé de l'autre côté de la brame (3).

9. Dispositif selon l'une quelconque des revendications 1 à 8, **caractérisé en ce qu'**une cage de laminage ou un laminoir (13, 14) est disposé(e) en aval du dispositif de fraisage et de décalaminage (6) dans le sens du transport (F).

10. Dispositif selon l'une quelconque des revendications 1 à 9, **caractérisé en ce qu'**il est réalisé de manière telle que le dispositif de décalaminage (6) et la machine de fraisage (4) peuvent être exploités au choix alternativement.

11. Dispositif selon l'une quelconque des revendications 1 à 9, **caractérisé en ce qu'**il est réalisé de manière telle que le dispositif de décalaminage (6) et la machine de fraisage (4) peuvent être exploités simultanément.
